# EUROPÄISCHE PATENTANMELDUNG

(11) **EP 1 280 248 A1**
(43) Veröffentlichungstag der Anmeldung: **29.01.2003**
(21) Anmeldenummer: 01117984.3
(22) Anmeldetag: 25.07.2001
(51) Int. Cl.: H02B 1/56

(54) **Schaltschrank mit mindestens einer Schranktür und einem gebläseunterstützten Luftkreislauf im Innenraum**

(71) Anmelder: Rittal GmbH & Co. KG, 35745 Herborn (DE)
(72) Erfinder: Keens, Gery, Roborough, Plymouth PL6 6AU (GB); Woodward, Michael, Looe, Cornwall PL 132HX (GB)
(74) Vertreter: Fleck, Hermann-Josef, Dr.-Ing.

(57) **Zusammenfassung**

Die Erfindung betrifft einen Schaltschrank mit mindestens einer Schranktür mit einem im Innenraum zirkulierenden, durch Gebläse unterstützten Luftkreislauf zum Kühlen der in dem Innenraum eingebauten, wärmeerzeugenden Geräte, die in Etagen übereinander angeordnet sind. Der Luftkreislauf lässt sich dadurch effizienter auslegen und besser an die Verhältnisse im Innenraum anpassen, dass im untersten Bereich des Schaltschrankes mindestens eine zum Innenraum führende Luftzuführungsöffnung für Außenluft oder gekühlte Luft vorgesehen ist, dass in diesem Bereich eine Luftleitkammer angeordnet ist, die die zugeführte Luft einem vertikalen Luftkanal zuführt, der zwischen der Schranktür und der Frontseite der eingebauten Geräte gebildet ist, und dass auf der Rückseite der eingebauten Geräte den Etagen vorzugsweise individuelle Sauggebläse zugeordnet sind, die Teilluftströme aus den Etagen absaugen und aus dem Innenraum abführen.

## Beschreibung

Die Erfindung betrifft einen Schaltschrank mit mindestens einer Schranktür mit einem im Innenraum zirkulierenden, durch Gebläse unterstützten Luftkreislauf zum Kühlen der in dem Innenraum eingebauten, wärmeerzeugenden Geräte, die in Etagen übereinander angeordnet sind.

Gerade beim Einbau von wärmeempfindlichen, elektronischen Geräten in den Innenraum eines geschlossenen Schaltschrankes ist die Kühlung der wärmeerzeugenden Baugruppen durch einen zirkulierenden Luftkreislauf von wesentlicher Bedeutung für einen funktionsgerechten und störungsfreien Betrieb. Es hat daher nicht an Versuchen gefehlt, diese Art Kühlung durch Optimierung des Luftkreislaufes zu verbessern.

Wie die FR 2 193 303 zeigt, ist ein Schaltschrank mit Einrichtungen zum Kühlen der im Innenraum desselben auftretenden Warmluft bekannt, bei dem mindestens eine Vertikalseite mit einem doppelwandigen Wandelement abgeschlossen ist, dessen äußeres und inneres Wandblatt einen großflächigen Luftkanal bilden und bei dem das innere Wandblatt mehrere, verteilt eingebrachte Durchbrüche aufweist. Dieses Wandelement dient als eine Art Wärmetauscher und bringt daher nur einen kleinen Wirkungsgrad. Eine Verbesserung des Wirkungsgrades ist nur dann erreichbar, wenn dieser Luftkanal mit einem speziell ausgebildeten Wärmetauscher und zusätzlichen Gebläsen versehen wird.

Die DE 195 31 310 A1 zeigt einen Wärmetauscher für einen Schaltschrank, der als Seitenwand mit dem Rahmengestell des Schaltschrankes verbindbar ist. Dabei weist eine Teilinnenwand des Wärmetauscher-Gehäuses Durchbrüche auf, die mit einer Abdeckplatte mit Schlauchabschnitten abgedeckt ist. Die zu- oder abgeführte Luft des Wärmetauschers kann über die Schlauchabschnitte an bestimmten Stellen im Schaltschrankinnenraum abgesaugt oder zugeführt werden.

Bei einem Schaltschrank nach der DE 40 08 272 C1 ist im unteren und im oberen Bereich einer Seitenwand jeweils ein Durchlass zum Belüften des Innenraumes vorgesehen. Dabei bilden die Durchlässe getrennte Einheiten, die die Seitenwand vervollständigen und Filter, Ventilatoren und dgl. aufnehmen können.

Wie die US 5,440,450 zeigt, kann ein Ventilator in einer Kühleinrichtung so eingebaut werden, dass seine Ansaugseite im spitzen Winkel zu seiner Ausblasseite steht.

Aus der US 4,535,386 ist bekannt, den Wärmetauscher in die Schranktür eines Schaltschrankes einzubauen oder die Schranktür selbst als Wärmetauscher auszubilden.

Aus der DE 41 11 457 C1 ist ein Schaltschrank mit einem Rahmengestell bekannt, das aus Rahmenprofilabschnitten zusammengesetzt, mit Seitenteilen und wenigstens einer Schranktür verkleidet ist und einen Schaltschrankinnenraum umgibt, in dem elektrische Einbauten untergebracht sind, und wobei im Bereich mindestens einer vertikalen Seite des Rahmengestelles eine Kühleinrichtung angeordnet ist, die die im Schaltschrankinnenraum entstehende Wärme abführt. Das Kühlgerät ist anstelle eines Seitenteils mit dem Rahmengestell verbunden und umschließt selbst einen Innenraum, in dem die Kühleinheiten untergebracht sind. In den Innenraum kann Luft aus dem Schaltschrankinnenraum angesaugt, gekühlt und dann wieder in den Schaltschrankinnenraum zurückgeführt werden. Um den Aufwand für die Kühleinrichtung zu reduzieren, ist vorgesehen, dass parallel beabstandet zu dem Seitenteil ein Trennelement an den Rahmenprofilabschnitten angebracht ist, das zusammen mit dem Seitenteil einen Lüftungskanal bildet, dass das Trennelement mit mehreren Durchbrüchen versehen ist, die eine räumliche Verbindung des Lüftungskanals zu dem Schaltschrankinnenraum schaffen und dass mittels eines Lüfters Luft durch den Lüftungskanal und wenigstens einen Durchbruch förderbar ist. Das Trennelement kann ohne Austausch des Seitenteils nachgerüstet und der Schaltschrank mit einem Kühlluftkreislauf versehen werden.

Es ist Aufgabe der Erfindung, einen Schaltschrank der eingangs erwähnten Art mit einem Luftkreislauf zu versehen, der die anfallende Wärme aus allen übereinander liegenden Etagen in gleich guter Weise unabhängig voneinander abführt und an die Bedingungen in den Etagen angepasst werden kann.

Dies wird nach der Erfindung dadurch erreicht, dass im untersten Bereich des Schaltschrankes mindestens eine zum Innenraum führende Luftzuführungsöffnung für Außenluft oder gekühlte Luft vorgesehen ist, dass in diesem Bereich eine Luftleitkammer angeordnet ist, die die zugeführte Luft einem vertikalen Luftkanal zuführt, der zwischen der Schranktür und der Frontseite der eingebauten Geräte gebildet ist, und dass auf der Rückseite der eingebauten Geräte den Etagen vorzugsweise individuelle Sauggebläse zugeordnet sind, die Teilluftströme aus den Etagen absaugen und aus dem Innenraum abführen.

Der von außen beginnende Luftkreislauf wird dabei gezielt in den im Frontbereich befindlichen, vertikalen Luftkanal ausgeführt und kann mit Hilfe der im Bereich der Rückwand angeordneten Sauggebläse individuell aufgeteilt in die Etagen zur Kühlung der darin befindlichen elektrischen Geräte verwendet und abgestimmt werden. Dabei führen die Sauggebläse die angesaugten Teilluftströme wieder in die Atmosphäre ab. Zur Kühlung steht in jedem Fall die den Schaltschrank umgebende Luft zur Kühlung zur Verfügung, es kann jedoch auch eine bereits abgekühlte Raumluft als Kühlluft mehreren im Raum aufgestellten Schaltschränken zugeführt werden.

Nach einer vorteilhaften Ausgestaltung kann vorgesehen sein, dass die Luftzuführungsöffnung im Boden angeordnet ist und dass die Luftleitkammer der Luftzuführungsöffnung überdeckt und nur im Bereich der Frontseite der eingebauten Geräte zum Luftkanal hin offen ist. Die Zuführung der Luft bzw. Kühlluft lässt sich dadurch einfach lösen, dass er auf einer Bodenkonstruktion eines Computerraumes aufgestellt ist, wobei die Luftzuführungsöffnung mit dem Hohlraum der mittels Bodenplatten abdeckbaren Bodenkonstruktion in Verbindung steht und daraus mit Außenluft oder gekühlter Luft versorgbar ist.

Die Teilluftströme der Etagen lassen sich dadurch gegeneinander entkoppeln, dass die Etagen durch Schottbleche abgeteilt sind, dass eine weitere Schranktür die Rückwand ersetzt und diese zwischen der Rückseite der eingebauten Geräte einen vertikalen Aufnahmekanal bildet, in dem die Sauggebläse untergebracht sind.

Die Abführung der angesaugten Teilluftströme ist auf einfache Weise so gelöst, dass der Aufnahmekanal im oberen Bereich des Innenraumes mindestens eine Luftabführungsöffnung aufweist. Die Luftabführungsöffnung wird dabei vorzugsweise in die Deckwand des Schaltschrankes verlagert. Für diesen Fall sind die Sauggebläse mit einer axialen Einströmöffnung und mit einer radialen Ausströmöffnung versehen. Die Rückwand kann hier auch durch eine weitere Schranktür ersetzt werden.

Die Abführung der angesaugten Teilluftströme kann jedoch auch so vollzogen sein, dass die Rückwand pro Etage mindestens eine Luftabführungsöffnung aufweist. Dann sind die Sauggebläse mit einer axialen Einströmöffnung und einer axialen Ausströmöffnung versehen, wobei diese Ausströmöffnungen auf die zugeordneten Luftabführungsöffnungen in der Rückwand ausgebildet und/oder koppelbar oder gekoppelt sind.

Ist zudem vorgesehen, dass die Sauggebläse individuell betreibbar und regelbar sind, dann können die Teilluftströme in den Etagen an die dort herrschenden

Bedingungen leicht angepasst werden. In der einfachsten Weise ist dazu vorgesehen, dass die den Etagen zugeordneten Sauggebläse in Abhängigkeit von den in den Etagen auftretenden Temperaturen regelbar sind.

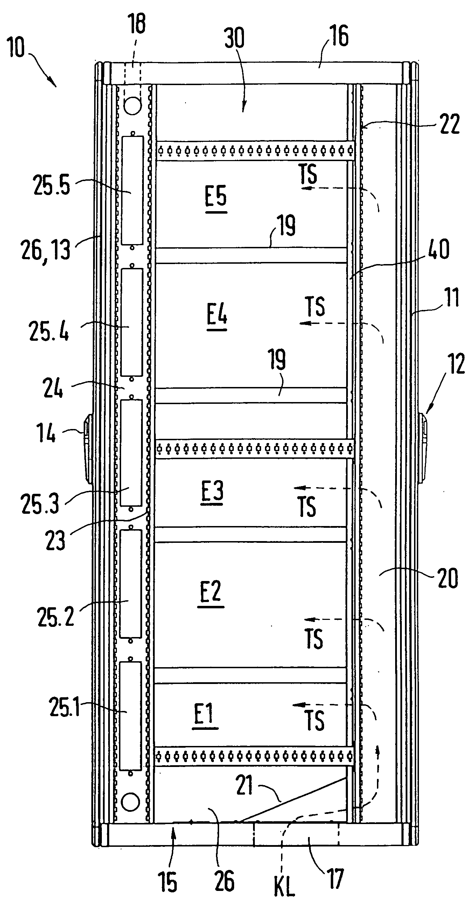

Die Erfindung wird anhand eines in der Zeichnung im Vertikalschnitt dargestellten Ausführungsbeispiels näher erläutert.

Wie der Schnitt zeigt, umschließt ein Schaltschrank 10 einen Innenraum 30. Dabei kann der Innenraum 30 durch ein aus Rahmenschenkeln zusammengesetztes Rahmengestell aufweisen, dessen offene Seiten durch zwei Seitenwände, eine Bodenwand 15 und eine Deckwand 16 verschlossen sein. Die Vorderseite wird mittels einer Schranktür 11 verschlossen, während die Rückseite wahlweise mit einer Rückwand 26 oder einer weiteren Schranktür 13 verschlossen sein kann. Die Schranktüren 11 und 13 sind mittels üblichen Schrankverschlüssen 12 und 14 verschließbar und zum Öffnen freigebbar.

Der Innenraum 30 wird mittels Schottblechen 19 in mehrere vertikal übereinander angeordnete Etagen E1 bis E5 unterteilt, die strömungsmäßig gegeneinander entkoppelt sein können.

Der Innenraum 30 nimmt ein Einbaugestell 40 auf, an dem die in den Etagen E1 bis E5 unterzubringenden, elektrischen Geräte befestigt werden. Die Geräte enden in einer Frontseite 22 und einer Rückseite 23 des Einbaugestelles 40.

Im Bodenteil 15 ist eine Luftzuführungsöffnung 17 eingebracht, über die Außenluft oder gekühlte Luft KL in den Innenraum 30 einleitbar ist. Die Lufteinführungsöffnung 17 wird mittels einer Luftleitkammer 21 im untersten Bereich 26 des Innenraumes 30 überdeckt, die nur noch zu einem vertikalen Luftkanal 20 hin offen ist. Dieser Luftkanal 20 ist zwischen der Schranktür 11 und der Frontseite 22 der eingebauten Geräte, d.h. des Einbaugestelles 40, ausgebildet und nimmt die zugeführt Luft KL auf.

In ähnlicher Weise wird auf der Rückseite 23 des Einbaugestelles 40 zur Rückwand 26 oder zu der weiteren Schranktür 13 hin ein vertikaler Aufnahmekanal 24 gebildet, in dem die den Etagen E1 bis E5 zugeordneten Sauggebläse 25.1 bis 25.5 untergebracht sind, die Teilluftströme TS aus dem Luftkanal 20 über die Etagen E1 bis E5 mit den eingebauten Geräten absaugen und aus dem Innenraum 30 abführen.

Die Sauggebläse 25.1 bis 25.5 haben vorzugsweise eine axiale Einströmöffnung und eine radiale Ausströmöffnung, so dass der angesaugte Teilluftstrom TS vertikal in den Aufnahmekanal 24 geleitet und über eine in der Deckwand 16 angeordnete Luftabführungsöffnung 18 abgeführt wird. Diese Luftabführung ist besonders dann zu wählen, wenn die Rückseite des Schaltschrankes 10 mittels einer weiteren Schranktür 13 verschließbar ist.

Ist die Rückseite des Schaltschrankes 10 jedoch mit einer Rückwand 26 verschlossen, dann kann jedem Sauggebläse 25.1 bis 25.5 eine individuelle Luftabführungsöffnung 18 in die Rückwand 26 zugeordnet werden, die mit einer axialen Ausströmöffnung des zugeordneten Sauggebläses 25.1 bis 25.5 verbunden oder koppelbar ist.

In beiden Fällen hat die individuelle Zuordnung der Sauggebläse 25.1 bis 25.5 zu den Etagen E1 bis E5 den Vorteil, dass die Teilluftströme TS in den Etagen E1 bis E5 individuell angepasst und geregelt werden können. Dabei können die Sauggebläse 25.1 bis 25.5 vorzugsweise in Abhängigkeit von den in den Etagen E1 bis E5 auftretenden Temperaturen geregelt werden.

Selbstverständlich kann die Luftleitkammer 21 im untersten Bereich 26 des Innenraumes 30 auch eine in einer Seitenwand oder der Rückwand vorgesehene Luftzuführungsöffnung 17 mit dem Luftkanal 20 verbinden. Zudem kann ein Sauggebläse 25.1 auch benachbarten Etagen E1 und E2 usw. zugeordnet werden, wenn in den Etagen eine kleinere Wärmeentwicklung vorliegt. Schließlich spielt es keine Rolle, wie die Geräte in einem Einbaugestell 40 befestigt und angeordnet sind. Auch der Aufbau derselben, z.B. als Steckbaueinheiten oder dgl. spielt für die neue Art des Luftkreislaufes nur eine untergeordnete Rolle.

## Patentansprüche

1. Schaltschrank mit mindestens einer Schranktür mit einem im Innenraum zirkulierenden, durch Gebläse unterstützten Luftkreislauf zum Kühlen der in dem Innenraum eingebauten, wärmeerzeugenden Geräte, die in Etagen übereinander angeordnet sind,
**dadurch gekennzeichnet,**
**dass** im untersten Bereich (26) des Schaltschrankes (10) mindestens eine zum Innenraum (30) führende Luftzuführungsöffnung (17) für Außenluft oder gekühlte Luft vorgesehen ist,
**dass** in diesem Bereich (26) eine Luftleitkammer (21) angeordnet ist, die die zugeführte Luft (KL) einem vertikalen Luftkanal (20) zuführt, der zwischen der Schranktür (11) und der Frontseite (22) der eingebauten Geräte gebildet ist, und
**dass** auf der Rückseite (23) der eingebauten Geräte den Etagen (E1 bis E5) vorzugsweise individuelle Sauggebläse (25.1 bis 25.5) zugeordnet sind, die Teilluftströme (TS) aus den Etagen (E1 bis E5) absaugen und aus dem Innenraum (30) abführen.

2. Schaltschrank nach Anspruch 1,
**dadurch gekennzeichnet,**
**dass** die Luftzuführungsöffnung (17) im Boden (15) angeordnet ist und dass die Luftleitkammer (21) der Luftzuführungsöffnung (17) überdeckt und nur im Bereich der Frontseite (2) der eingebauten Geräte zum Luftkanal (20) hin offen ist.

3. Schaltschrank nach Anspruch 1 oder 2,
**dadurch gekennzeichnet,**
**dass** die Etagen (E1 bis E5) durch Schottbleche (19) abgeteilt sind, dass eine weitere Schranktür (13) die Rückwand (26) ersetzt und diese zwischen der Rückseite (23) der eingebauten Geräte einen vertikalen Aufnahmekanal (24) bildet, in dem die Sauggebläse (25.1 bis 25.5) untergebracht sind.

4. Schaltschrank nach einem der Ansprüche 1 bis 3,
**dadurch gekennzeichnet,**
**dass** der Aufnahmekanal (24) im oberen Bereich des Innenraumes (30) mindestens eine Luftabführungsöffnung (18) aufweist.

5. Schaltschrank nach Anspruch 4,
**dadurch gekennzeichnet,**
**dass** die Luftabführungsöffnung (18) in der Deckwand (16) angeordnet ist.

6. Schaltschrank nach Anspruch 3,
**dadurch gekennzeichnet,**
**dass** die Rückwand (26) pro Etage (E1 bis E5) mindestens eine Luftabführungsöffnung (18) aufweist.

7. Schaltschrank nach Anspruch 3 und 4,
**dadurch gekennzeichnet,**
**dass** die Sauggebläse (25.1 bis 25.5) eine axiale Einströmöffnung und eine radiale Ausströmöffnung aufweisen.

8. Schaltschrank nach Anspruch 3 und 6,
**dadurch gekennzeichnet,**
**dass** die Sauggebläse (25.1 bis 25.5) eine axiale Einströmöffnung und eine axiale Ausströmöffnung aufweisen und
**dass** die Ausströmöffnung auf die zugeordnete Luftabführungsöffnung (18) in der Rückwand (26) ausgerichtet und/oder mit dieser gekoppelt oder koppelbar ist.

9. Schaltschrank nach einem der Ansprüche 1 bis 8,
**dadurch gekennzeichnet,**
**dass** er auf einer Bodenkonstruktion eines Computerraumes aufgestellt ist, wobei die Luftzuführungsöffnung (17) mit dem Hohlraum der mittels Bodenplatten abdeckbaren Bodenkonstruktion in Verbindung steht und daraus mit Außenluft oder gekühlter Luft (KL) versorgbar ist.

10. Schaltschrank nach einem der Ansprüche 1 bis 9,
**dadurch gekennzeichnet,**
**dass** die Sauggebläse (25.1 bis 25.5) individuell betreibbar und regelbar sind.

11. Schaltschrank nach Anspruch 10,
**dadurch gekennzeichnet,**
**dass** die den Etagen (E1 bis E5) zugeordneten Sauggebläse (25.1 bis 25.5) in Abhängigkeit von den in den Etagen (E1 bis E5) auftretenden Temperaturen regelbar sind.
